# EUROPÄISCHE PATENTSCHRIFT

(11) **EP 1 935 562 B1**
(45) Veröffentlichungstag und Bekanntmachung des Hinweises auf die Patenterteilung: **27.01.2010**
(21) Anmeldenummer: 07122678.1
(22) Anmeldetag: 07.12.2007
(51) Int. Cl.: B23Q 17/22, B65G 35/06, B23Q 7/14

(54) **Transfereinrichtung für Werkstücke und Verfahren für den Transfer von Werkstücken**
Transfer device for workpieces and method for transferring workpieces
Dispositif de transfert pour pièces à usiner et procédé pour le transfert de pièces à usiner

(30) Priorität: 20.12.2006 EP 06126714
(43) Veröffentlichungstag der Anmeldung: 25.06.2008
(73) Patentinhaber: Komax Holding AG, 6036 Dierikon (CH)
(72) Erfinder: Ehlert, Hilmar, 6362 Stansstad (CH)
(74) Vertreter: Blöchle, Hans

(56) Entgegenhaltungen:
- EP-A- 0 340 639
- EP-A- 0 704 391
- EP-A- 1 275 601
- EP-A- 1 491 466
- GB-A- 2 185 720
- US-A- 4 800 818

## Beschreibung

Die Erfindung betrifft eine Transfereinrichtung für Werkstücke, die zur Bearbeitung mittels mindestens eines Werkstückträgers mindestens einer Arbeitsstation zuführbar sind, wobei mindestens ein Antrieb vorgesehen ist, der die Werkstückträger linear bewegt gemäss der Definition des unabhängigen Einrichtungsanspruchs. Ferner betrifft die Erfindung ein Verfahren für den Transfer von Werkstücken gemäss der Definition des unabhängigen Verfahrensanspruchs.

Aus der Anmeldeschrift EP 0 340 639 ist eine Montageanlage für Bauteile bekannt geworden. Ein zentraler Antrieb treibt mittels Riemen Bauteile tragende Aufnahmen an, die die Bauteile von Arbeitsstation zu Arbeitsstation bewegen. Die Aufnahmen sind mit einer Kodierung versehen, die mittels Sensor abtastbar ist. Das Sensorsignal wird zur Positionierung einer Aufnahme der Steuerung des Antriebs zugeführt. Die Sensorsignale der übrigen Aufnahmen werden zur Feststellung der Lage der Aufnahmen innerhalb der Montageanlage verwendet.

Hier will die Erfindung Abhilfe schaffen. Die Erfindung, wie sie in den unabhängigen Ansprüchen gekennzeichnet ist, löst die Aufgabe, eine Einrichtung und ein Verfahren zu schaffen, die einen genauen Transfer von Werkstücken ermöglicht.

Bei der Transfereinrichtung werden Werkstücke zur Bearbeitung mittels mindestens eines Werkstückträgers mindestens einer Arbeitsstation zugeführt, wobei mindestens ein Antrieb vorgesehen ist, der die Werkstückträger linear bewegt und wobei je Antrieb ein Positionsgeber vorgesehen ist, der die genaue Position des Werkstückträgers erfasst.

Vorteilhafte Weiterbildungen der Erfindung sind in den abhängigen Patentansprüchen angegeben.

Die erreichten Vorteile sind im wesentlichen darin zu sehen, dass mit der erfindungsgemässen Transfereinrichtung Unzulänglichkeiten der Treibmittel wie beispielsweise Zahnriemen weitgehend ausgeschaltet werden können. Transferantriebe mit Zahnriemen sind sehr kostengünstig und einfach herstellbar, Zahnriemen weisen aber Federeigenschaften und Herstellungstoleranzen auf, die sich auf die Genauigkeit des Tansfers der Werkstücke negativ auswirken. Insbesondere bei Richtungsumkehr wirkt sich die Elastizität und das Spiel des Zahnriemens mit bis zu 0,1 mm Abweichung auf die Positioniergenauigkeit aus. Beim Transfervorgang wird das Werkstück bzw. der Werkstückträger mit einer geringeren Auflösung des ohnehin vorhandenen Motorpositionsgebers bis in einen Zielbereich transferiert. Im Zielbereich ist eine höhere Auflösung eines weiteren Positionsgebers und somit eine genaue Positionierung des Werkstückträgers vorgesehen, wobei im Zielbereich das Treibmittel keinen Einfluss mehr hat auf die Genauigkeit der Positionierung des Werkstückträgers. Insgesamt ist so ein dynamischer und sehr genauer Transfer von Werkstücken machbar.

Anhand der beiliegenden Figuren wird die vorliegende Erfindung näher erläutert.

Es zeigen:
Fig. 1
   eine Transfereinrichtung für Werkstücke,
Fig. 2
   Einzelheiten eines Werkstückträgers und
Fig. 3
   ein Blockschaltbild einer Positionsregelung für den Werkstückträger.

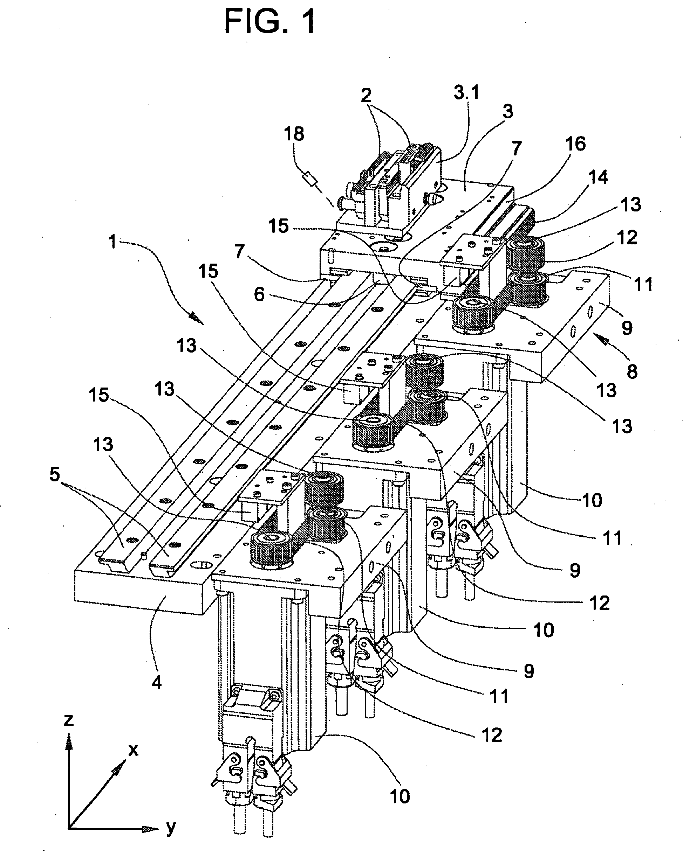

Fig. 1 zeigt eine Transfereinrichtung 1 für Werkstücke 2, die zur Bearbeitung mittels mindestens eines Werkstückträgers 3 mindestens einer nicht dargestellten Arbeitsstation zuführbar sind. Die Werkstücke 2 werden mittels Haltevorrichtung 3.1 festgehalten. An einem Transfertisch 4 sind Führungsschienen 5 vorgesehen, die der linearen Führung des Werkstückträgers 3 in x-Richtung dienen, wobei Führungsrollen 6 in y-Richtung und Gleitführungen 7 in z-Richtung wirken.

Je Arbeitsstation ist eine am Transfertisch 4 angeordnete Antriebskonsole 9 mit einem Antrieb 8 vorgesehen. Der Antrieb 8 besteht aus einem Motor 10 mit einem Treibrad 11, das ein Treibmittel 12, beispielsweise ein doppelseitiger Zahnriemen antreibt. Der Zahnriemen 12 ist über zwei Umlenkräder 13 geführt, wobei der Zahnriemen 12 in eine Verzahnung 14 des Werkstückträgers 3 eingreift. Mit dem Antrieb 8 kann der Werkstückträger 3 in x-Richtung vorwärts und rückwärts bewegt werden. Beim Transfer des Werkstückträgers 3 von einem Antrieb zum anderen Antrieb beweget der eine Antrieb den Werkstückträger 3 soweit bis dieser in den Eingriff des Zahnriemens des anderen bzw. benachbarten Antriebs gelangt, wobei beide Antriebe während der Übergabe bzw. Übernahme drehzahlmässig und zahnmässig synchronisiert sind. Die Drehbewegung des Motors bzw. der Motorwelle wird mittels eines Sensors, beispielsweise eines am Motor angeordneten Encoders 21 erfasst und einer Antriebsregelung und einer Positionsregelung zugeführt. Der für die Synchronisation notwendige Encoder ist ein kostengünstiges Marktprodukt.

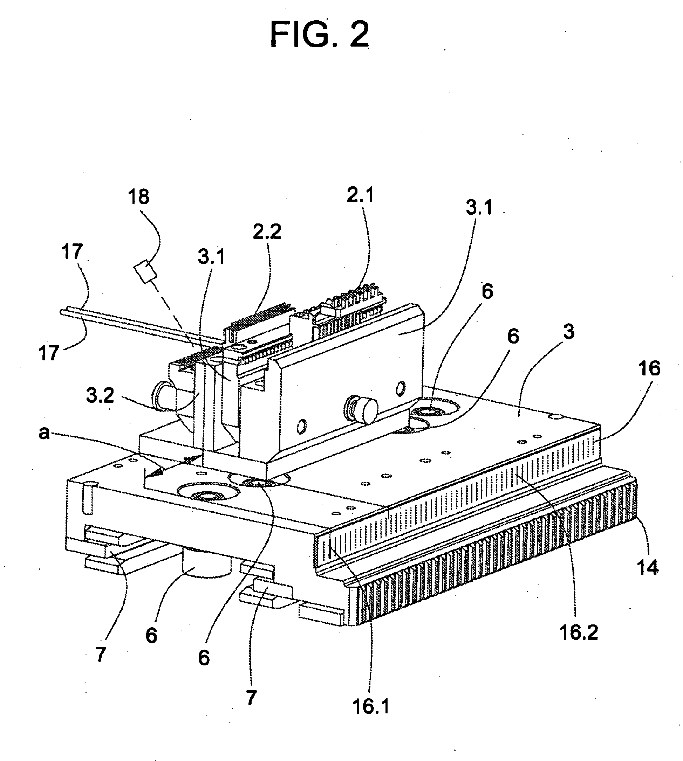

Fig. 2 zeigt Einzelheiten des Werkstückträgers 3. Am Werkstückträger ist ein Codeträger, beispielsweise ein optischer oder magnetischer Massstab 16 angeordnet, dessen Code mittels eines fest an der Antriebskonsole 9 des Antriebes angeordneten ersten Sensors 15 lesbar ist. Massstab 16 und erster Sensor 15 bilden einen Positionsgeber 20. In der Regel ist für jede Arbeitsstation, bzw. am korrespondierenden Antrieb, bei der präzise Arbeitsprozesse vorgesehen sind, ein erster Sensor 15 vorgesehen. Bei der in Fig. 1 gezeigten Transfereinrichtung 1 ist für jede der Arbeitsstationen ein erster Sensor 15 vorgesehen, wobei jeder jeweils zusammen mit dem Massstab 16 des Werkstückträgers 3 den Positionsgeber 20 bilden. Bei kleinen und/oder eng angeordneten Arbeitsstationen und je nach Länge des Zahnriemens kann ein Antrieb 8 für mehr als eine Arbeitsstation vorgesehen sein.

Wie in Fig. 1 gezeigt, steht der Werkstückträger 3 vor der ersten Arbeitsstation. In dieser Lage wird der Abstand a der Haltevorrichtung 3.1 von der Referenzmarke 16.1 ermittelt. Dazu dienen ein fest angeordneter zweiter Sensor 18, der erste Sensor 15, der Massstab 16 und der Antrieb 8. Der Werkstückträger 3 wird mittels Antrieb 8 soweit bewegt, bis der erste Sensor 15 die Referenzmarke 16.1 detektiert. Dann wird der Werkstückträger 3 mittels Antrieb 8 soweit bewegt, bis der zweite Sensor 18 eine markante Stelle des Werkstückes 2 bzw. der Haltevorrichtung 3.1 beispielsweise eine Kante 3.2 detektiert. Die dabei detektierte Anzahl Marken 16.2 des Massstabes 16 entspricht dem Abstand a. Der Wert a wird der zugehörigen Antriebsregelung des ausgemessenen Werkstückträgers 3 übermittelt. Jeder erste Sensor 15 ist an seiner Antriebskonsole 9 präzise und genau gleich wie der erste den Abstand a bestimmende Sensor 15 angeordnet. Falls die Lage des Massstabes 16 von Werkstückträger zu Werkstückträger variiert, variiert auch der Abstand a, was aber auf die Genauigkeit des Arbeitsprozesses keine Wirkung hat. Falls eine manuelle bzw. mechanische Bestimmung des Abstandes a genügt, kann der oben genannte Messvorgang entfallen. Der Abstand a wird dann mechanisch ausgemessen und der Antriebsregelung übermittelt.

Der Werkstückträger 3 gemäss Fig. 2 trägt als Werkstücke 2 ein erstes Steckergehäuse 2.1 und ein zweites Steckergehäuse 2.2, wobei als Arbeitsprozess Kabel 17 horizontal in das zweite Steckergehäuse 2.2 eingeführt werden. Beim ersten Steckergehäuse 2.1 werden die Kabel vertikal von oben eingeführt. Ausser der Kabelbestückung kann die Transfereinrichtung 1 beispielsweise auch für Montageprozesse oder Stanzprozesse für Flachleiter verwendet werden.

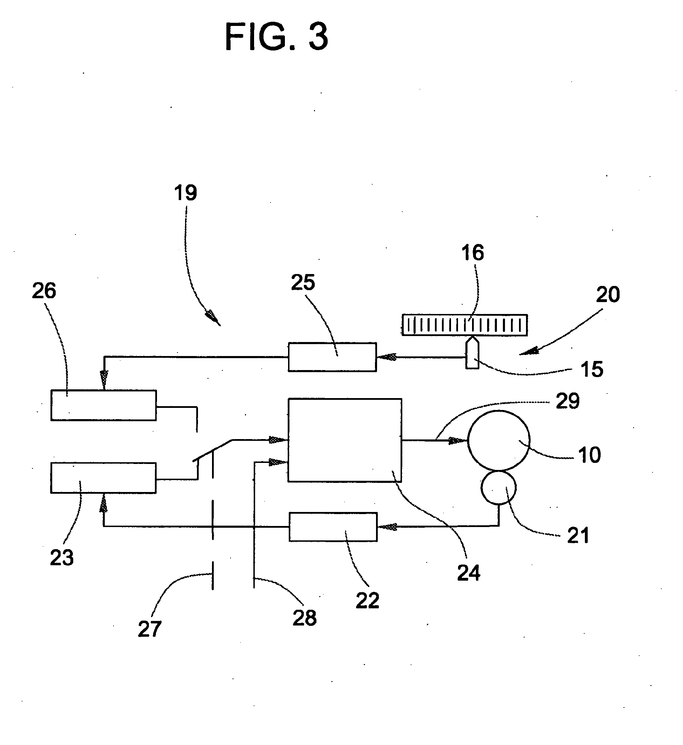

Fig. 3 zeigt ein Blockschaltbild einer Positionsregelung 19 für den Werkstückträger 3. Die Drehbewegung des Motors 10 bzw. der Motorwelle wird mittels eines Sensors, beispielsweise eines am Motor angeordneten Encoders 21 erfasst und das Encodersignal einem ersten Skalierer 22 zugeführt, der das Signal in ein Einheitsmass umwandelt. Das Einheitsmass steht dann als Motorpositionsistwert 23 des Motors 10 für einen Positionsregler 24 zur Verfügung. Das Signal des Positionsgebers 20 wird einem zweiten Skalierer 25 zugeführt, der das Signal in ein Einheitsmass umwandelt. Das Einheitsmass steht dann als Geberpositionsistwert 26 des Positionsgebers 20 für den Positionsregler 24 zur Verfügung. Ein Umschalter 27 führt entweder den Positionsistwert 23 des Motors 10 oder den Positionsistwert 26 des Positionsgebers 20 dem Positionsregler 24 zu. Ein dem Positionsregler 24 zugeführter Positionssollwert ist mit 28 bezeichnet. Der Positionsregler 24 beaufschlagt den den Werkstückträger 3 bewegenden Motor 10 mit einem Steuersignal 29.

Das vom Werkstückträger 3 anzufahrende Ziel bzw. der Positionssollwert 28 wird vorgegeben. Während des Transfers des Werkstückträgers 3 ins Ziel führt der Positionsregler 24 laufend einen Vergleich zwischen Positionssollwert 28 und Positionsistwert 23 des Motors 10 durch, wobei der Werkstückträger dynamisch aber ungenau in einen Zielbereich bewegt wird. Die Auflösung des Encoders 21 ist gegenüber der Auflösung des Massstabes 16 um ein Mehrfaches kleiner. Beispielsweise ist die Auflösung des Encoders 21 etwa fünfmal kleiner als die Auflösung des Massstabes 16. Die Auflösung des Encoders 21 ist beispielsweise 25 µm und die Auflösung des Massstabes 16 ist beispielsweise 5 µm. Die Auflösung des Massstabes 16 kann aber auch noch kleiner gewählt werden. Dann führt der Umschalter 27 den Positionsistwert 26 des hochauflösenden Positionsgebers 20 dem Positionsregler 24 zu, der dann den Werkstückträger 3 präzise ins Ziel bewegt bzw. feinpositioniert, wobei die Elastizität und das Spiel des Zahnriemens keinen Einfluss mehr hat auf die Positioniergenauigkeit. Bei weiteren Zielfahrten mit demselben Werkstückträger 3 wird nur der Positionsistwert 26 des Positionsgebers 20 dem Positionsregler 24 zugeführt. Die Positioniergenauigkeit mit dem Encodersignal ist etwa 100 µm. Ohne die Unzulänglichkeiten des Zahnriemens ist die Positioniergenauigkeit mit dem Positionsgebersignal des Positionsgebers 20 etwa 5 µm.

Beim Transfer des Werkstückträgers 3 vom einen Antrieb zum anderen Antrieb wird als Positionsistwert der Motorpositionsistwert 23 des einen Motors 10 verwendet, weil der Codeträger bzw. Massstab 16 des Werkstückträgers 3 den einen Sensor 15 verlässt. Der andere Motor 10 wird mit dem einen Motor synchronisiert und die andere Motorregelung übernimmt das Ziel der einen Motorregelung. Sobald der andere Sensor 15 die Referenzmarke 16.1 des Massstabes 16 detektiert, werden die sich am anderen Sensor 15 vorbeibewegenden Marken 16.2 des Massstabes 16 gezählt. Beim Erreichen des Ziels aufgrund des Motorpositionsistwertes 23 wird dann die Feinpositionierung mit dem Positionsistwert des Positionsgebers 20 ausgeführt.

## Patentansprüche

1. Transfereinrichtung (1) für Werkstücke (2), die zur Bearbeitung mittels mindestens eines Werkstückträgers (3) mindestens einer Arbeitsstation zuführbar sind, wobei mindestens ein Antrieb (8) vorgesehen ist, der die Werkstückträger (3) linear bewegt, wobei der Antrieb (8) einen Motor (10) mit einer Motorwelle aufweist, und je Antrieb (8) ein Positionsgeber (20) vorgesehen ist, der die genaue Position des Werkstückträgers (3) erfasst, und
der Positionsgeber (20) einen feststehenden Sensor (15) aufweist, der den Code eines am Werkstückträger (3) angeordneten Codeträgers (16) detektiert,
**dadurch gekennzeichnet,**
**dass** ein Positionsregler (24) vorgesehen ist, der durch einen Umschalter (27) entweder das Signal des Positionsgebers (20) als Geberpositionsistwert (26) oder das Signal eines die Drehbewegung des Motors (10) bzw. der Motorwelle erfassenden Sensors (21) als Motorpositionsistwert (23) zusammen mit einem Positionssollwert (28) zu einem Steuersignal (29) verarbeitet und den den Werkstückträger (3) bewegenden Motor (10) des Antriebs (8) mit dem Steuersignal (29) beaufschlagt.

2. Transfereinrichtung (1) nach Anspruch 1,
**dadurch gekennzeichnet,**
**dass** die Auflösung des Positionsgebers (20) ein Mehrfaches der Auflösung des die Drehbewegung des Motors (10) bzw. der Motorwelle erfassenden Sensors (21) ist.

3. Transfereinrichtung (1) nach einem der Ansprüche 1 oder 2,
**dadurch gekennzeichnet,**
**dass** der Positionsgeber (20) einen feststehenden Sensor (15) und einen am Werkstückträger (3) angeordneten Massstab (16) aufweist, der mittels des Sensors (15) abtastbar ist.

4. Transfereinrichtung (1) nach Anspruch 3,
**dadurch gekennzeichnet,**
**dass** der Massstab (16) eine Auflösung von mindestens 5 µm hat.

5. Transfereinrichtung (1) nach einem der vorhergehenden Ansprüche,
**dadurch gekennzeichnet,**
**dass** je Arbeitsstation ein Antrieb (8) vorgesehen ist.

6. Verfahren für den Transfer von Werkstücken (2) mit einer Transfereinrichtung (1) gemäß Anspruch 1,
**dadurch gekennzeichnet,**
**dass** auf dem Transferweg des Werkstückträgers (3) ins Ziel ein der Drehbewegung der Motorwelle eines Motors (10) entsprechendes Signal als Motorpositionsistwert (23) zur Steuerung des Motors (10) verwendet wird und beim Erreichen des Zielbereiches das Signal eines Positionsgebers (20) als Geberpositionsistwert (26) zur Steuerung des Motors (10) verwendet wird, wobei der Werkstückträger (3) ins Ziel bewegt wird.

7. Verfahren nach Anspruch 6,
**dadurch gekennzeichnet,**
**dass** das Signal des Positionsgebers (20) als Geberpositionsistwert (26) oder das Signal des die Drehbewegung des Motors (10) bzw. der Motorwelle erfassenden Sensors (21) als Motorpositionsistwert (23) zusammen mit einem Positionssollwert (28) zu einem Steuersignal (29) verarbeitet wird und mit dem Steuersignal (29) den den Werkstückträger (3) bewegenden Motor (10) des Antriebs (8) beaufschlagt wird.

8. Verfahren nach einem der Ansprüche 6 oder 7,
**dadurch gekennzeichnet,**
**dass** die Positioniergenauigkeit mit dem Motorpositionsistwert (23) etwa 100 µm ist und die Positioniergenauigkeit mit dem Geberpositionsistwert (26) etwa 5 µm ist.

9. Verfahren nach einem der Ansprüche 6 bis 8 mit einer Transfereinrichtung gemäß Anspruch 3,
**dadurch gekennzeichnet,**
**dass** beim Transfer des Werkstückträgers (3) vom einen Antrieb zum anderen Antrieb als Positionsistwert der Motorpositionsistwert (23) des einen Motors (10) verwendet wird und dass die andere Motorregelung das Ziel der einen Motorregelung übernimmt und dass sobald der andere Sensor (15) die Referenzmarke (16.1) des Massstabes (16) detektiert die sich am anderen Sensor (15) vorbeibewegenden Marken (16.2) des Massstabes (16) gezählt werden und dass beim Erreichen des Ziels aufgrund des Motorpositionsistwertes (23) die Feinpositionierung mit dem Positionsistwert (26) des Positionsgebers (20) ausgeführt wird.

10. Verfahren nach Anspruch 6,
**dadurch gekennzeichnet,**
**dass** zur Bestimmung der Lage der Werkstücke (2) auf dem Werkstückträger (3) der Werkstückträger auf eine Referenzmarke (16.1) des Codeträgers (16) bewegt wird und dann weiter bewegt wird, bis ein feststehender Sensor (18) eine markante Stelle des Werkstückes (2) detektiert, wobei der Weg von der Referenzmarke (16.1) bis zur markanten Stelle mittels Positionsgeber (20) gemessen wird.

## Claims

1. Transfer device (1) for workpieces (2) which, for the purpose of processing, are feedable by means of at least one workpiece carrier (3) to at least one workstation, at least one drive (8) being provided that moves the workpiece carriers (3) linearly, the drive (8) having a motor (10) with a motor shaft, and there being provided for each drive (8) a position emitter (20) which registers the exact position of the workpiece carrier (3),
and
the position emitter (20) having a stationary sensor (15) which detects the code of a code carrier (16) which is arranged on the workpiece carrier (3),
**characterized in that**,
a position regulator (24) is provided which, through a changeover switch (27), processes either the signal of the position emitter (20) as actual emitter position value (26), or the signal of a sensor (21) that registers the rotational movement of the motor (10) or of the motor shaft (21), as actual motor position value (23), together with a reference position value (28), into a control signal (29), and energizes the motor (10) of the drive (8) that moves the workpiece carrier (3) with the control signal (29).

2. Transfer device (1) according to Claim 1, **characterized in that** the resolution of the position emitter (20) is a multiple of the resolution of the sensor (21) that registers the rotational motion of the motor (10) or of the motor shaft.

3. Transfer device (1) according to one of claims 1 or 2,
**characterized in that**
the position emitter (20) has a stationary sensor (15) and a scale (16) that is arranged on the workpiece carrier (3) that is scannable by means of the sensor (15).

4. Transfer device (1) according to Claim 5,
**characterized in that**
the scale (16) has a resolution of at least 5 µm.

5. Transfer device (1) according to one of the foregoing claims,
**characterized in that**
for each work station a drive (8) is provided.

6. Method for the transfer of workpieces (2) with a transfer device (1) according to Claim 1,
**characterized in that**
on the transfer path of the workpiece carrier (3) into the destination, a signal that corresponds to the rotational movement of the motor shaft of a motor (10) is used as actual motor position value (23) to control the motor (10) and on reaching the destination area the signal of a position emitter (20) is used as actual emitter position value (26) to control the motor (10), the workpiece carrier (3) being moved into the destination.

7. Method according to Claim 6,
**characterized in that**
the signal of the position emitter (20) as actual emitter position value (26) or the signal of the sensor (21) that registers the rotational motion of the motor (10) or of the motor shaft as actual motor position value (23) is processed together with a reference position value (28) to a control signal (29) and that with the control signal (29) the motor (10) of the drive (8) that moves the workpiece carrier (3) is energized.

8. Method according to one of claims 6 or 7,
**characterized in that**
the positioning accuracy with the actual motor position value (23) is approximately 100 µm and the positioning accuracy with the emitter position value (26) is approximately 5 µm.

9. Method according to one of claims 6 to 8 with a transfer device according to Claim 3,
**characterized in that**
during transfer of the workpiece carrier (3) from one drive to the other drive the actual motor position value (23) of the one motor (10) is used as actual position value, and that the other motor regulator adopts the destination of the one motor regulator, and that as soon as the other sensor (15) detects the reference mark (16.1) of the scale (16) the marks (16.2) of the scale (16) that are moving past the other sensor (15) are counted, and that on reaching the destination, based on the actual motor position value (23), the fine positioning is executed with the actual position value (26) of the position emitter (20).

10. Method according to Claim 6,
**characterized in that**
to determine the position of the workpiece (2) on the workpiece carrier (3) the workpiece carrier is moved to a reference mark (16.1) of the code carrier (16) and then moved further, until a stationary sensor (18) detects a conspicuous point of the workpiece (2), the path from the reference mark (16.1) to the conspicuous point being measured by means of position emitter (20).

## Revendications

1. Dispositif de transfert (1) pour des pièces (2) qui, pour être traitées, sont aptes à être amenées dans au moins une station de travail à l'aide d'au moins un porte-pièces (3), étant précisé qu'il est prévu au moins un entraînement (8) qui déplace les porte-pièces (3) linéairement, que l'entraînement (8) comporte un moteur (10) avec un arbre de moteur et qu'il est prévu pour chaque entraînement (8) un capteur de position (20) qui détecte la position exacte du porte-pièces (3), et que le capteur de position (20) comporte un capteur fixe (15) qui détecte le code d'un support de code (16) disposé sur le porte-pièces (3),
**caractérisé en ce qu'**il est prévu un régulateur de position (24) qui, grâce à un commutateur (27), traite soit le signal du capteur de position (20), comme valeur réelle de position de capteur (26), soit le signal d'un capteur (21) détectant le mouvement rotatif du moteur (10) ou de l'arbre de moteur, comme valeur réelle de position de moteur (23), avec une valeur théorique de position (28) pour former un signal de commande (29), et qui sollicite avec le signal de commande (29) le moteur (10) de l'entraînement (8) qui déplace le porte-pièces (3).

2. Dispositif de transfert (1) selon la revendication 1, **caractérisé en ce que** la résolution du capteur de position (20) est plusieurs fois supérieure à la résolution du capteur (21) qui détecte le mouvement rotatif du moteur (10) ou de l'arbre de moteur.

3. Dispositif de transfert (1) selon la revendication 1 ou 2, **caractérisé en ce que** le capteur de position (20) comporte un capteur fixe (15) et une graduation (16) qui est disposée sur le porte-pièces (3) et qui est apte à être balayée à l'aide du capteur (15).

4. Dispositif de transfert (1) selon la revendication 3, **caractérisé en ce que** la graduation (16) a une résolution d'au moins 5 µm.

5. Dispositif de transfert (1) selon l'une des revendications précédentes, **caractérisé en ce qu'**il est prévu un entraînement (8) pour chaque station de travail.

6. Procédé pour le transfert de pièces (2) à l'aide d'un dispositif de transfert (1) selon la revendication 1, **caractérisé en ce que** sur le trajet du transfert du porte-pièces (3) vers la destination, un signal correspondant au mouvement rotatif de l'arbre d'un moteur (10) est utilisé comme valeur réelle de position de moteur (23) pour commander le moteur (10), et quand la zone de destination est atteinte, le signal d'un capteur de position (20) est utilisé comme valeur réelle de position de capteur (26) pour commander le moteur (10), le porte-pièces (3) étant amené à destination.

7. Procédé selon la revendication 6, **caractérisé en ce que** le signal du capteur de position (20), comme valeur réelle de position de capteur (26), ou le signal du capteur (21) détectant le mouvement rotatif du moteur (10) ou de l'arbre de moteur, comme valeur réelle de position de moteur (23), est traité avec une valeur théorique de position (28) pour former un signal de commande (29), et le moteur (10) de l'entraînement (8) qui déplace le porte-pièces (3) est sollicité avec le signal de commande (29).

8. Procédé selon l'une des revendications 6 ou 7, **caractérisé en ce que** la précision de positionnement avec la valeur réelle de position de moteur (23) est d'environ 100 µm et la précision de positionnement avec la valeur réelle de position de capteur (26) est d'environ 5 µm.

9. Procédé selon l'une des revendications 6 à 8 avec un dispositif de transfert selon la revendication 3, **caractérisé en ce que** lors du transfert du porte-pièces (3) d'un premier entraînement à un second entraînement, on utilise comme valeur réelle de position la valeur réelle de position de moteur (23) du premier moteur (10), **en ce que** la seconde régulation de moteur prend en charge la destination de la première régulation de moteur, **en ce que** dès que le second capteur (15) détecte le repère (16.1) de la graduation (16), les repères (16.2) de la graduation (16) qui passent devant le second capteur (15) sont comptés et **en ce que** lorsque la destination est atteinte, le positionnement précis est réalisé sur la base de la valeur réelle de position de moteur (23), avec la valeur réelle de position (26) du capteur de position (20).

10. Procédé selon la revendication 6, **caractérisé en ce que** pour définir la position des pièces (2) sur le porte-pièces (3), le porte-pièce est amené sur un repère (16.1) du support de code (16) et est ensuite amené plus loin jusqu'à ce qu'un capteur fixe (18) détecte un endroit marquant de la pièce (2), la distance entre le repère (16.1) et ledit endroit marquant étant mesurée à l'aide du capteur de position (20).
